# EUROPEAN PATENT APPLICATION

(11) **EP 4 094 925 A1**
(43) Date of publication of application: **30.11.2022**
(21) Application number: 21775969.5
(22) Date of filing: 25.02.2021
(51) Int. Cl.: B29C 64/106, B29C 64/209

(54) **EXCESS MATERIAL WITHDRAWAL CONTROL METHOD AND BIOPRINTER**

(30) Priority: 25.03.2020 CN 202010215720
(71) Applicant: Revotek Co., Ltd, Chengdu, Sichuan 611731 (CN)
(72) Inventor: LI, Yijun, Chengdu, Sichuan 611731 (CN); XIONG, Tao, Chengdu, Sichuan 611731 (CN)
(74) Representative: Kolster Oy Ab
(86) International application number: PCT/CN2021/077795
(87) International publication number: WO 2021/190231

(57) **Abstract**

Provided are an excess material withdrawal control method and a bioprinter. The excess material withdrawal control method comprises: obtaining the length of a printing material attached to the outside of a nozzle (12) of the printer; and depending on the length of the printing material, withdrawing, by means of a material driving mechanism, the printing material attached to the outside of the nozzle (12) multiple times until the length of the printing material attached to the outside of the nozzle (12) is not greater than an allowable value. According to the excess material withdrawal control method, the printing material attached onto the nozzle (12) of the printer can be effectively removed.

## Description

### CROSS-REFERENCE TO RELATED APPLICATIONS

The present application is based on and claims priority to China Patent Application No. 202010215720.5 filed on March 25, 2020, the disclosure of which is incorporated by reference herein in its entirety.

### TECHNICAL FIELD

The present disclosure relates to the field of bio-printing technology, and in particular, to a residual material withdrawal control method and a bio-printer.

### BACKGROUND

The bio-printer refers to a device that prints bio-ink into a designed three-dimensional structure by using the principles and methods of 3D printing. Biomaterials (for example, cells) and bio-compatible materials (for example, cell solutions) are made into bio-ink. By controlling the movement of the spray head of the bio-printer and ejecting the bio-ink, the bio-ink is printed and molded according to a preset three-dimensional digital model of an object to be printed.

Before bio-printing, the spray head needs to be prefilled with bio-ink. In order to ensure that the bio-ink can fill up the spray head during pre-filling, the pre-filled volume of the bio-ink is generally greater than or equal to the volume of the inner cavity of the spray head. When the pre-filled volume of the bio-ink is larger than the volume of the inner cavity of the spray head, the bio-ink may be attached to the nozzle position of the spray head. Due to a high viscosity of the bio-ink, the bio-ink does not drip from the nozzle by itself, so that droplets may be formed at the nozzle position. If the droplets on the nozzle are not cleaned in time, the droplets may affect subsequent printouts, or react with other printing materials to clog the nozzle.

In order to clean the droplets attached to the nozzle, cleaning members are used in some related technologies to scrape the droplets on the nozzles.

### SUMMARY

In one aspect of the present disclosure, a residual material withdrawal control method is provided. The method includes: obtaining a length of a printing material attached to the exterior of a spray head of a printer; and performing multiple withdrawals on the printing material attached to the exterior of the spray head by a material driving mechanism until the length of the printing material attached to the exterior of the spray head is not higher than an allowable value, according to the length of the printing material.

In some embodiments, a step of obtaining a length of a printing material includes: calculating the length of the printing material according to a pixel value corresponding to the printing material within an image obtained by photographing the spray head and the printing material attached to the exterior of the spray head.

In some embodiments, the residual material withdrawal control method further includes: causing the spray head to eject the printing material outwards by the material driving mechanism before the material driving mechanism withdraws the printing material; and causing the material driving mechanism to stop driving the printing material and hold on for a preset period of time when the length of the printing material ejected by the spray head reaches a first preset value, so as to stabilize the printing material attached to the exterior of the spray head.

In some embodiments, a step of performing multiple withdrawals on the printing material attached to the exterior of the spray head by the material driving mechanism according to the length of the printing material includes: setting the length of the printing material after holding on for the preset period of time to be an initial length value L0, and setting a withdrawal length D of the printing material according to the initial length value L0; withdrawing the printing material attached to the exterior of the spray head by the material driving mechanism in multiple cycles according to the withdrawal length D; in each cycle, after the printing material attached to the exterior of the spray head is withdrawn according to the withdrawal length D, obtaining a current length L of the printing material attached to the exterior of the spray head after this withdrawal, and calculating a ratio of the current length L to the initial length value L0; if the ratio is in a first preset range R1, calculating a reverse position error δ_{b} generated when a driving direction of the printing material by the material driving mechanism changes, and compensating a withdrawal length D of next withdrawal by the reverse position error δ_{b}; and if the ratio is in a second preset range R2, wherein a maximum value of the second preset range R2 is smaller than a minimum value of the first preset range R1, calculating a position error δₚ when the material driving mechanism withdraws the printing material, and compensating a withdrawal length D of the next withdrawal by the position error δₚ.

In some embodiments, in each cycle, if the ratio is in a third preset range R3, wherein a maximum value of the third preset range R3 is smaller than a minimum value of the second preset range R2, the withdrawal length D is set to a current length L after this withdrawal.

In some embodiments, a step of setting the withdrawal length D of the printing material according to the initial length value L0 includes: causing the withdrawal length D to be equal to 1/3~1/5 times of the initial length value L0.

In some embodiments, a maximum value of the first preset range R1 is 1, a minimum value of the first preset range R1 is 7/8~9/10; and a minimum value of the second preset range R2 is 1/3~1/5.

In some embodiments, the reverse position error δ_{b} is calculated by a formula δ_{b}=D- (L0-L), and the position error δₚ is calculated by a formula δ_{b}=D- (Lₙ₋₁-Lₙ) , where Lₙ₋₁ and Lₙ are values of the current length L in a previous cycle and this cycle, respectively, and n is a positive integer greater than 1.

In some embodiments, the material driving mechanism includes a servo motor and a syringe, a piston of the syringe is driven by the servo motor through a lead screw, a compensation amount C_{b} corresponding to the reverse position error δ_{b} is (δ_{b}/Pₜₕ) *R_{c}, and a compensation amount Cₚ corresponding to the position error δₚ is (δₚ/Pₜₕ) *R_{c}, where Pₜₕ is a pitch of the lead screw, and R_{c} is an encoder resolution of the servo motor.

In some embodiments, after the withdrawal length D is set to be the current length L after this withdrawal, it is determined whether a length of the printing material attached to the exterior of the spray head is no longer higher than an allowable value La, and whether the number N of cycle times of withdrawals has exceeded a preset number N0 of times; if the length of the printing material attached to the exterior of the spray head is no longer higher than the allowable value La, the material driving mechanism ends a withdrawal operation; if the length of the printing material attached to the exterior of the spray head is still higher than the allowable value La, and the number N of cycle times of withdrawals has exceeded the preset number N0 of times, an alarm signal to prompt abnormal emptying of the spray head is issued; and if the length of the printing material attached to the exterior of the spray head is still higher than the allowable value La, and the number N of cycle times of withdrawals does not reach the preset number N0 of times, a position error δₚ when the material driving mechanism withdraws the printing material is calculated, and a withdrawal length D of next withdrawal is compensated by the position error δₚ.

In some embodiments, the printer is a bio-printer, and the printing material is bio-ink.

In one aspect of the present disclosure, a bio-printer is provided. The bio-printer includes: a material driving mechanism having a spray head and configured to drive a printing material to be ejected or withdrawn through the spray head, wherein the printing material is bio-ink; a detecting mechanism configured to obtain a signal representative of a length of the printing material attached to the exterior of the spray head; and a controller signally connected with the detecting mechanism and the material driving mechanism, and configured to perform the preceding residual material withdrawal control method.

In some embodiments, the material driving mechanism includes: a power unit and a syringe, the syringe has a syringe barrel, the spray head and a piston, and the power unit is drivingly connected with the piston.

In some embodiments, the power unit includes: a servo motor having a power output end that is drivingly connected with the piston.

In some embodiments, the detecting mechanism includes: a camera; and a camera adjusting mechanism connected with the camera and configured to adjust a capturing position and a capturing angle of the camera.

In some embodiments, the camera adjusting mechanism includes: a support base; a sliding base connected with the support base through a guide structure, and slidable relative to the support base; and a turntable slidably disposed on the sliding base and rotatably connected with the camera.

### BRIEF DESCRIPTION OF THE ACCOMPANYING DRAWINGS

The accompanying drawings which constitute part of this specification, illustrate the exemplary embodiments of the present disclosure, and together with this specification, serve to explain the principles of the present disclosure.

The present disclosure may be more explicitly understood from the following detailed description with reference to the accompanying drawings, in which:
Fig. 1 is a functional block diagram of some embodiments of the bio-printer according to the present disclosure;
Fig. 2 is a schematic structural view of some embodiments of the bio-printer according to the present disclosure;
Fig. 3 is a schematic view of a mounting structure of the material driving mechanism in some embodiments of the bio-printer according to the present disclosure;
Fig. 4 is a schematic structural view of a detecting mechanism in some embodiments of the bio-printer according to the present disclosure;
Fig. 5 is a schematic flowchart of some embodiments of the residual material withdrawal control method according to the present disclosure;
Fig. 6 is a schematic flow chart of other embodiments of the residual material withdrawal control method according to the present disclosure;
Fig. 7 is a schematic flowchart of still other embodiments of the residual material withdrawal control method according to the present disclosure.

It should be understood that the dimensions of various parts shown in the accompanying drawings are not drawn according to actual proportional relations. In addition, the same or similar components are denoted by the same or similar reference signs.

### DETAILED DESCRIPTION

Various exemplary embodiments of the present disclosure will now be described in detail with reference to the accompanying drawings. The description of the exemplary embodiments is merely illustrative and is in no way intended as a limitation to the present disclosure, its application or use. The present disclosure may be implemented in many different forms, which are not limited to the embodiments described herein. These embodiments are provided to make the present disclosure thorough and complete, and fully convey the scope of the present disclosure to those skilled in the art. It should be noticed that: relative arrangement of components and steps, material composition, numerical expressions, and numerical values set forth in these embodiments, unless specifically stated otherwise, should be explained as merely illustrative, and not as a limitation.

The use of the terms "first", "second" and similar words in the present disclosure do not denote any order, quantity or importance, but are merely used to distinguish between different parts. A word such as "comprise", "include" or variants thereof means that the element before the word covers the element(s) listed after the word without excluding the possibility of also covering other elements. The terms "up", "down", "left", "right", or the like are used only to represent a relative positional relationship, and the relative positional relationship may be changed correspondingly if the absolute position of the described object changes.

In the present disclosure, when it is described that a particular device is located between the first device and the second device, there may be an intermediate device between the particular device and the first device or the second device, and alternatively, there may be no intermediate device. When it is described that a particular device is connected to other devices, the particular device may be directly connected to said other devices without an intermediate device, and alternatively, may not be directly connected to said other devices but with an intermediate device.

All the terms (including technical and scientific terms) used in the present disclosure have the same meanings as understood by those skilled in the art of the present disclosure unless otherwise defined. It should also be understood that terms as defined in general dictionaries, unless explicitly defined herein, should be interpreted as having meanings that are consistent with their meanings in the context of the relevant art, and not to be interpreted in an idealized or extremely formalized sense.

Techniques, methods, and apparatus known to those of ordinary skill in the relevant art may not be discussed in detail, but where appropriate, these techniques, methods, and apparatuses should be considered as part of this specification.

In some related technologies, a cleaning member is used to scrape the droplets on the nozzle. It has been found through studies that, in view of the particularity of the printed biological tissue or organ, the scraping method might contaminate the nozzle or the bio-ink in the nozzle, so that the printed biological tissue or organ cannot be used.

In view of this, the embodiments of the present disclosure provide a bio-printer and a residual material withdrawal control method, which can effectively eliminate the printing material attached to the spray head of the printer.

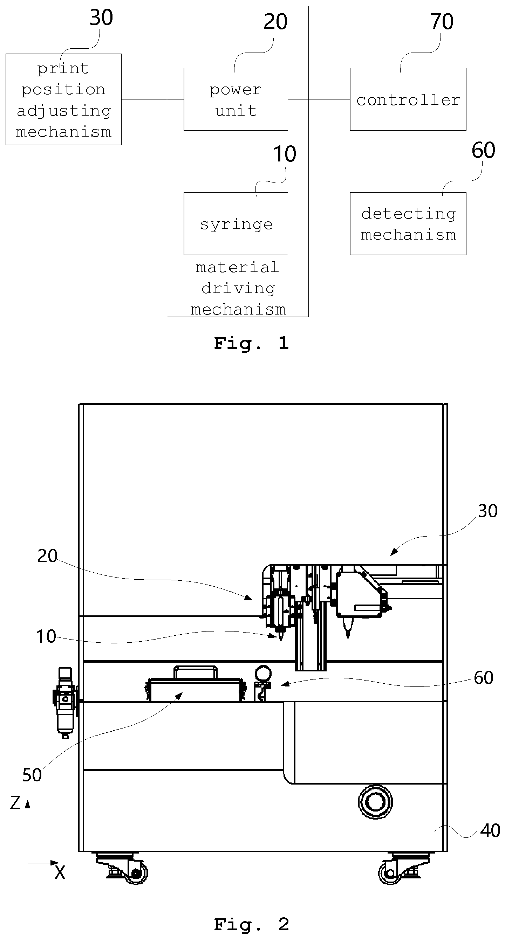

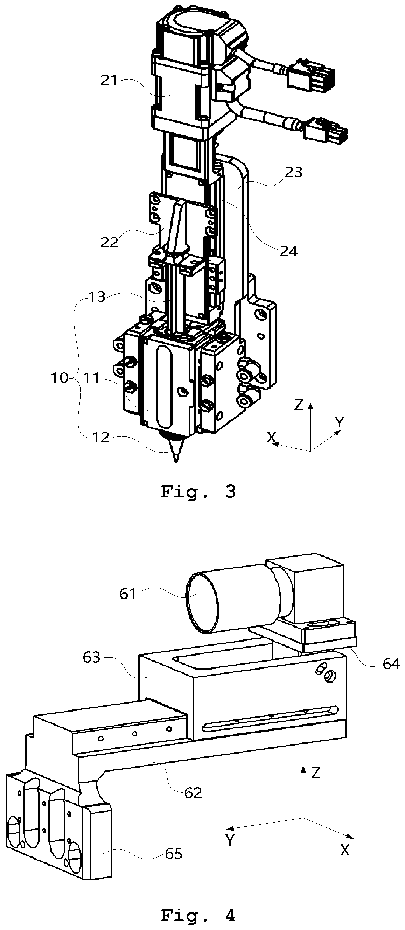

Fig. 1 is a functional block diagram of some embodiments of the bio-printer according to the present disclosure. Fig. 2 is a schematic structural view of some embodiments of the bio-printer according to the present disclosure. Fig. 3 is a schematic view of a mounting structure of the material driving mechanism in some embodiments of the bio-printer according to the present disclosure.

Referring to Figs. 1-3, in some embodiments, the bio-printer includes: a material driving mechanism, a detecting mechanism 60 and a controller 70. The material driving mechanism has a spray head 12. The material driving mechanism can drive the printing material to be ejected or withdrawn through the spray head.

The detecting mechanism 60 is configured to obtain a signal representative of a length of the printing material attached to an exterior of the spray head 12. The detecting mechanism 60 may perform detection in multiple methods, for example detecting a signal representative of a length of the printing material attached to the exterior of the spray head 12 by means of visual detection or by way of laser or infrared. In some embodiments, the detecting mechanism 60 performs detection by means of visual detection, which may effectively improve the detection efficiency.

The controller 70 is signally connected with the detecting mechanism 60 and the material driving mechanism, and configured to obtain a length of the printing material attached to the exterior of the spray head 12, and withdraw the printing material attached to the exterior of the spray head 12 by the material driving mechanism according to the length of the printing material, so as to shorten or eliminate the printing material attached to the exterior of the spray head 12.

Compared with the related art of scraping the droplets on the nozzle, in this embodiment, the printing material attached to the exterior of the spray head is withdrawn so that less or no printing material is attached to the exterior of the spray head, thereby preventing the printing material attached to the exterior of the spray head from adversely affecting on subsequent prints or reacting with other printing materials to clog the spray head. Since there is no need to use a cleaning member to scrape the nozzle or the printing material in the nozzle, it is possible to correspondingly avoid contamination of the printing material by the cleaning member, thereby ensuring the quality of the printed product (for example, biological tissue or organ).

In some embodiments, the printing material attached to the exterior of the spray head refers to the printing material adhered to the nozzle of the spray head and suspended below the nozzle. Correspondingly, the length of the printing material attached to the exterior of the spray head is the distance from the nozzle to the lowermost point of the printing material suspended below the nozzle. In other embodiments, the printing material attached to the exterior of the spray head includes not only the printing material adhered to the nozzle of the spray head and suspended below the nozzle, but also the printing material wrapped around part of the outer wall of the spray head. Correspondingly, the length of the printing material attached to the exterior of the spray head is the distance from the uppermost point of the printing material wrapped outside the spray head to the lowermost point of the printing material suspended below the nozzle.

In some embodiments, the controller 70 may withdraw the printing material attached to the exterior of the spray head 12 in multiple cycles by the material driving mechanism according to the length of the printing material, until the length of the printing material attached to the exterior of the spray head 12 is not less than an allowable value. By withdrawing the printing material attached to the exterior of the spray head in multiple cycles, it is possible to more finely control the withdrawing process of the printing material, so as satisfy the residual material withdrawal control requirements under different operational conditions (for example, printing materials with different viscosities, driving mechanisms with different precisions, or different external environmental parameters, and the like).

Referring to Figs. 2 and 3, the material driving mechanism includes a power unit 20 and a syringe 10. The syringe 10 has a syringe barrel 11, a spray head 12 and a piston 13. The piston 13 is inserted inside the syringe barrel 11, and the spray head 12 is located at one end of the syringe barrel 11 and communicates with an interior of the syringe barrel 11. The power unit 20 outputs power to drive the piston 13 to move relative to the syringe barrel 11, so that the internal volume of the syringe barrel 11 can be changed, thereby implementing withdrawing or ejecting the printing material. In some embodiments, the printing material is bio-ink. The bio-ink within the syringe barrel 11 may be formed of a biological material (for example, a cell) and a bio-compatible material (for example, a cell solution).

Referring to Fig. 3, in some embodiments, the power unit 20 includes a servo motor 21 having a power output end drivingly connected to the piston 13. The servo motor 21 has a high control precision, which may effectively improve the precision of the bio-printer to withdraw residual material of the printing material. In other embodiments, the power unit 20 may also use other driving elements, for example a stepper motor, an air cylinder, and the like.

In Fig. 3, the power unit 20 may further include a sliding block 22, a lead screw, a chute 24 and a bracket 23. The chute 24 and the syringe barrel 11 are disposed on the bracket 23, and the lead screw is disposed on the bracket 23 and connected to the power output end. The sliding block 22 is connected with the piston 13 and threadedly mated with the lead screw. When the syringe 10 containing the bio-ink is provided on the bracket 23, the sliding block 22 may be clamped to the piston 13.

The sliding block 22 is slidably disposed on the chute 24. When the servo motor 21 outputs torque through the power output end, the rotation of the lead screw can be converted into a linear motion of the sliding block 22 along the chute 24. The sliding block 22 drives the piston 13 to move relative to the syringe barrel 11 so as to change the internal volume of the syringe barrel 11.

In order to enable the printing material to be printed according to a preset three-dimensional digital model of a printed object as target, referring to Figs. 1 and 2, in some embodiments, the bio-printer further includes: a pedestal 40 and a print position adjusting mechanism 30. The pedestal 40 is a work bench of the bio-printer, which may be fixed on the ground or movably provided on the ground by wheels. A printing platform 50 may be fixedly or movably provided on the pedestal 40. The print position adjusting mechanism 30 is also disposed on the pedestal 40, and may be drivingly connected with the material driving mechanism for driving the material driving mechanism to move, so as to adjust a spatial position of the spray head 12 relative to the pedestal 40.

In Fig. 2, the print position adjusting mechanism includes a first motion unit moving along a first direction (for example, the X-axis direction in Fig. 2) and a second motion unit mounted on the first motion unit and moving along a second direction (for example, the Z-axis in Fig. 2). The second direction may be parallel to the movement direction of the piston of the syringe 10. The second motion unit can move relative to the first motion unit. The first motion unit includes a first guide rail for guiding the movement of the second motion unit and a first driving portion for driving the second motion unit to move along the first guide rail. The first driving portion includes a lead screw, a swivel nut threadedly mated with the lead screw, and an electric motor for driving the lead screw to rotate. The extending direction of the lead screw is consistent with the extending direction of the first guide rail, and the swivel nut is connected with the second motion unit. When the motor drives the lead screw to rotate, the swivel nut moves along the lead screw, and the swivel nut drives the second motion unit to move along the first guide rail.

The second motion unit includes a second guide rail for guiding the movement of the material driving mechanism and a second driving portion for driving the material driving mechanism to move along the second guide rail. The second driving portion may also include a lead screw, a swivel nut threadedly mated with the lead screw, and an electric motor for driving the lead screw to rotate. The extending direction of the lead screw is consistent with the extending direction of the second guide rail, and the swivel nut is connected with the material driving mechanism. When the motor drives the lead screw to rotate, the swivel nut moves along the lead screw, and the swivel nut drives the material driving mechanism to move along the second guide rail.

Fig. 4 is a schematic structural view of a detecting mechanism in some embodiments of the bio-printer according to the present disclosure.

Referring to Fig. 4, in some embodiments, the detecting mechanism 60 detects the signal representative of a length of the printing material attached to the exterior of the spray head by means of visual detection. In Fig. 4, the detecting mechanism 60 includes: a camera 61 and a camera adjusting mechanism. The camera adjusting mechanism may be provided on the pedestal 40 and connected with the camera 61, and configured to adjust a capturing position and a capturing angle of the camera 61.

Referring to Figs. 2 and 4, in some embodiments, the camera adjusting mechanism may include: a support base 62, a sliding base 63 and a turntable 64. The support base 62 may be provided on the pedestal 40. A connecting plate 65 is provided at one end of the support base 62, and the connecting plate 65 may be fixed to the pedestal 40 by a connecting piece (for example, a bolt or the like). The sliding base 63 is connected to the support base 62 through a guide structure, and slidable relative to the support base 62. In Fig. 4, the guide structure is a structure in which a guide rail is mated with a guide groove. For example, a guide groove is provided on the sliding base 63, and a guide rail mated with the guide groove is provided on the surface of one side of the support base 62 adjacent to the sliding base 63, so as to realize a stable sliding pair between the sliding base 63 with the support base 62.

In Fig. 4, the turntable 64 is slidably disposed on the sliding base 63 and rotatably connected to the camera 61. The turntable 64 may be partially embedded within a long groove of the sliding base 63, wherein the long groove may extend along the Y-axis direction, so that the turntable 64 can drive the camera 61 to adjust a position along the Y-axis. The turntable 64 is rotatably connected to the camera 61, so that the camera 61 can rotate relative to the turntable 64 around the Z axis. By way of position adjustment on the Y axis and rotation adjustment around the Z axis of the camera 61, and cooperating with driving the movement of the material driving mechanism in the Z axis and the X axis by the print position adjusting mechanism 30, the capturing position and the capturing angle of the camera 61 relative to the spray head 12 is adjusted so as to realize a high cost performance whilst satisfying the image acquiring needs.

When the camera 61 photographs the spray head 12 and the printing material attached to the exterior of the spray head 12 to obtain an image, the controller 70 may calculate a length of the printing material according to a pixel value corresponding to the printing material within this image. For example, a preset ratio of the pixel value within the image to an actual length is determined by calculation or multiple experiments, and the actual length of this object in this direction is calculated according to the preset ratio and the pixel value occupied by the object within the image obtained by photographing in one direction (for example, the Z-axis direction).

In the various embodiments of the bio-printer described above, the controller may employ a general purpose processor, a digital signal processor (DSP), an application specific integrated circuit (ASIC), a field programmable gate array (FPGA) or other programmable logic devices, discrete gate or transistor logic, discrete hardware assembly, or any combination thereof designed to perform the functions described herein. The general purpose processor may be a microprocessor, but in an alternative solution, the processor may be any conventional processor, microcontroller, or state machine. The processor may also be implemented as a combination of computing devices, for example a combination of DSP and a microprocessor, a plurality of microprocessors, one or more microprocessors cooperating with a DSP core, or any other such configuration.

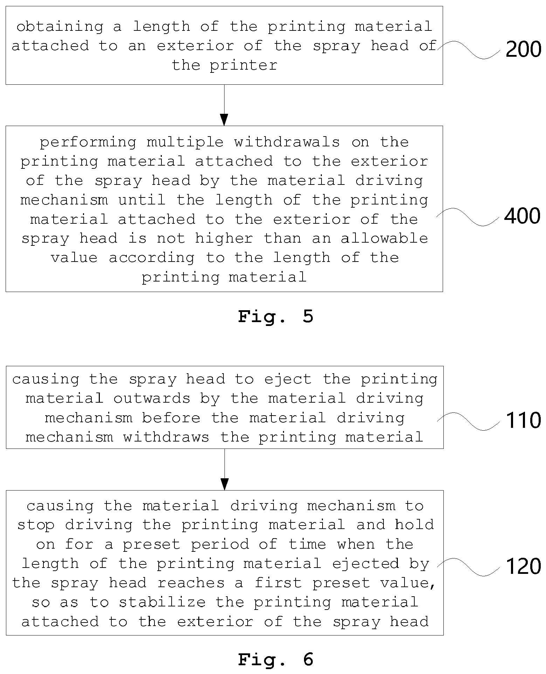

Fig. 5 is a schematic flowchart of some embodiments of the residual material withdrawal control method according to the present disclosure.

Referring to Fig. 5, in some embodiments, the residual material withdrawal control method includes:

Step 200: obtaining a length of the printing material attached to an exterior of the spray head of the printer;

Step 400: performing multiple withdrawals on the printing material attached to the exterior of the spray head by the material driving mechanism until the length of the printing material attached to the exterior of the spray head is not higher than an allowable value, according to the length of the printing material.

The residual material withdrawal control method may be performed by the controller in various embodiments of the bio-printer of the present disclosure, and may also be performed by the controller in other printers capable of realizing the printing function by driving the printing material. The printing material includes but is not limited to bio-ink.

In step 200, the step of obtaining a length of the printing material may include: calculating the length of the printing material according to the pixel value corresponding to the printing material within the image obtained by photographing the spray head and the printing material attached to the exterior of the spray head. Referring to Figs. 2 and 4, in some embodiments, the camera 61 may photograph the spray head 12 and the printing material attached to the exterior of the spray head 12 at a certain frequency so as to obtain at least one image. The controller 70 may convert the pixel value of the printing material within the image in the vertical direction into the actual length of the printing material attached to the exterior of the spray head 12.

In step 400, after determining the actual length of the printing material attached to the exterior of the spray head 12, the controller may send a control instruction to the material driving mechanism according to the length, so that the servo motor 21 in the material driving mechanism drives the piston 13 to perform withdrawal operation on the printing material in multiple cycles by the lead screw and the sliding block, thereby allowing that the length of the printing material attached to the exterior of the spray head 12 is not higher than an allowable value.

In this embodiment, by withdrawing the printing material attached to the exterior of the spray head in multiple cycles, it is possible to more finely control the withdrawal process of the printing material so as to satisfy the residual material withdrawal control requirements under different operational conditions (for example, printing materials with different viscosities, driving mechanisms with different precisions or different parameters of external environment and the like). In addition, the risk of contamination increased by manual operation is avoided by the detection of the length of the printing material by the detecting mechanism, and the withdrawal control of the material driving mechanism by the controller.

Fig. 6 is a schematic flow chart of other embodiments of the residual material withdrawal control method according to the present disclosure.

Referring to Fig. 6, in some embodiments, the residual material withdrawal control method further includes:

Step 110: causing the spray head 12 to eject the printing material outward by the material driving mechanism before the material driving mechanism withdraws the printing material;

Step 120: causing the material driving mechanism to stop driving the printing material, and hold on for a preset period of time when the length of the printing material ejected by the spray head 12 reaches a first preset value, so as to stabilize the printing material attached to the exterior of the spray head 12.

Before step 110, the syringe 10 filled with the printing material may be first mounted on the bracket 23 of the power unit 20, and the piston 13 of the syringe 10 is fixedly connected with the sliding block 22.

In step 110, after the spray head 12 moves to the pre-filling position (within the capturing range of the camera 61), the controller sends a control instruction to the servo motor 21 in the power unit 20 so as to drive the piston 13 to move towards one side where the spray head 12 is situated, so that the spray head 12 ejects the printing material outward. In this process, considering that some printing materials have a large flow inertia, it is difficult to control the length of the printing material ejected from the spray head if the speed is too fast. Therefore, the material driving mechanism may drive the printing material to be ejected from the spray head at a slow speed (for example, 0.5~2mm/s).

In step 120, during the process of ejecting the printing material, the spray head may be photographed by the camera at a certain frequency, and the length of the printing material in the image obtained by photographing may be determined. When the length of the printing material ejected by the spray head 12 reaches a first preset value, the driving motor 21 in the power unit 20 stops driving the piston 13. The determination of the first preset value here mainly depends on the viscosity of the material. In some embodiments, for some types of printing materials, the first preset value may be selected to be 2-3 mm, so that the withdrawal control process of length of the printing material satisfies the precision requirements with a high efficiency.

Considering the flow inertia of the printing material, the controller holds on for a preset period of time (for example, 2-4 seconds) after the controller causes the material driving mechanism to stop driving the printing material, so as to stabilize the printing material attached to the exterior of the spray head 12.

The above-described steps 110 and 120 are performed before step 400, and may be performed before or after step 200, or simultaneously with step 200.

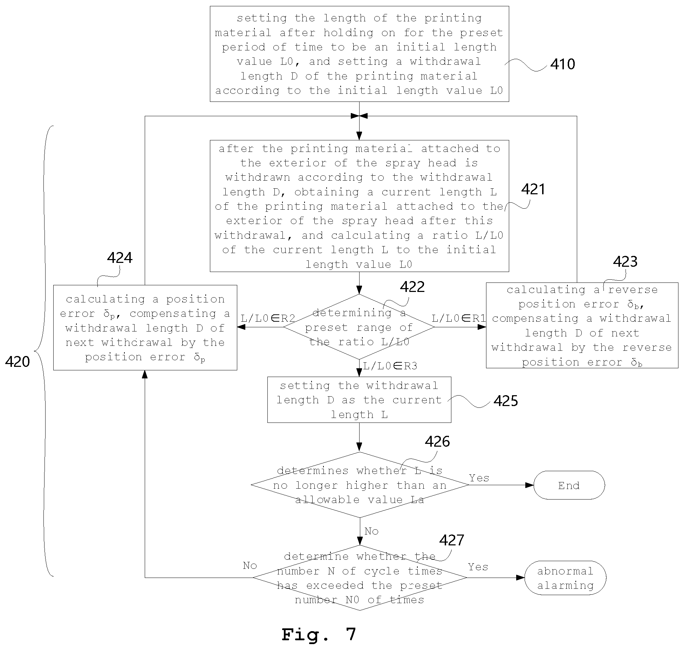

Fig. 7 is a schematic flowchart of still other embodiments of the residual material withdrawal control method according to the present disclosure.

Referring to Fig. 7, in some embodiments, step 400 includes step 410 and step 420. In step 410, the length of the printing material after holding on for a preset time period is set to be an initial length value L0, and the withdrawal length D of the printing material is set according to the initial length value L0. In some embodiments, the withdrawal length D may be set to be 1/3~1/5 times of the initial length L0. For a controller using PID control, considering the characteristics of PID control, the control process is subject to overshoot or oscillation within a certain range in the early stage of turning, and tends to be stable after about 1-3 cycles. Therefore, in some embodiments, the withdrawal length D is set to be 1/4 times of the initial length L0, that is, D=L0*1/4, so as to ensure that the control curve is as stable as possible.

In step 420, according to the withdrawal length D, the material driving mechanism withdraws the printing material attached to the exterior of the spray head 12 in multiple cycles. The controller may control the servo motor 21 to rotate reversely so as to drive the sliding block 22 and the piston 13 to retreat, thereby realizing the withdrawal operation of the printing material attached to the exterior of the spray head.

Each cycle of step 420 may specifically include steps 421 to 424.

In step 421, after the printing material attached to the exterior of the spray head 12 is withdrawn according to the withdrawal length D, it is possible to hold on for a preset period of time (for example, 2 to 4 seconds) so as to stabilize the printing material attached to the exterior of the spray head 12. Referring to the length obtaining method in step 200, the controller obtains a current length L of the printing material attached to the exterior of the spray head 12 after this withdrawal (that is, the remaining length after this withdrawal), and calculates a ratio L/L0 of the current length L to the initial length L0.

Taking the piston of the syringe driven by the servo motor as an example, during the process of pre-filling the spray head, the extrusion action force of the bio-ink on the syringe can cause the deformation of the syringe barrel to expand outward. When the bio-ink is withdrawn, the bio-ink can in turn cause the deformation of the syringe to contract inward. Due to the viscosity of the bio-ink, it is very difficult for the deformation produced by the syringe to restore to an initial shape, thereby indirectly affecting the change of the volume of the syringe and changing the amount of the bio-ink actually ejected by the spray head. In addition, the difference in the viscosity of the bio-ink and the inherent characteristics of the mechanical system also cause that the amount of the bio-ink actually ejected/withdrawn is different from a theoretical value when the servo motor executes a position control instruction, thereby generating a position error δₚ.

The mechanical transmission system generally has a back clearance, which causes that a reverse position error δ_{b}, that is, back clearance is generated when the driving direction of the printing material by the material driving mechanism is changed (for example, when the servo motor commutates). When the printing material is withdrawn for the first time, the system is present with a reverse position error δ_{b} and a position error δₚ at the same time. After the first withdrawal, there may be a circumstance in which there is no change or a slight change in the length of the printing material attached to the exterior of the spray head 12, and at this time, the reverse position error δ_{b} is much larger than the position error δₚ. At this time, the position error δₚ may be ignored, and the withdrawal length D of the next withdrawal is compensated only according to the reverse position error δ_{b}.

After the withdrawal length D is compensated according to the reverse position error δ_{b} during the next withdrawal, since the reverse position error δ_{b} has been compensated, the back clearance may be ignored, and the withdrawal length D of the next withdrawal is compensated according to the position error δₚ.

In step 422, the preset range in which the ratio falls may be determined. If the ratio is in the first preset range R1 (i.e., L/L0∈R1), step 423 is performed, and if the ratio is in the second preset range R2 (i.e., L/L0∈R2), step 424 is performed. The maximum value of the second preset range R2 is smaller than the minimum value of the first preset range R1.

In step 423, the reverse position error δ_{b} generated when the driving direction of the printing material by the material driving mechanism is changed is calculated, and the withdrawal length D of the next withdrawal is compensated by the reverse position error δ_{b}. In step 424, the position error δₚ when the printing material is withdrawn by the material driving mechanism is calculated, and the withdrawal length D of the next withdrawal is compensated by the position error δₚ. After steps 423 and 424 are executed, it returns to step 421 for the next withdrawal.

In this embodiment, the back clearance and the position error are calculated during each withdrawal cycle process, and the withdrawal length of the next withdrawal cycle is correspondingly compensated, so that it is possible to improve the withdrawal precision, and avoid a phenomenon of inward recess of the printing material at the spray head resulting from excessive withdrawals of the printing material due to a low withdrawal precision.

In some embodiments, the maximum value of the first preset range R1 is 1, and the minimum value is 7/8~9/10, for example, 7/8. For example, after this withdrawal (for example, the first withdrawal), if 1≥L/L0≥7/8, the position error δ ₚ is ignored. In step 423, the reverse position error δ_{b} is calculated, and the withdrawal length D of the next withdrawal is compensated by the reverse position error δ_{b}. The reverse position error δ_{b} may be calculated by the formula δ_{b}=D-(L0-L) .

In some embodiments, the material driving mechanism includes the servo motor 21 and the syringe 10. The piston 13 of the syringe 10 is driven by the servo motor 21 through the lead screw. Correspondingly, according to the reverse position error δ_{b}, the compensation amount C_{b} of the servo motor corresponding to the reverse position error δ_{b} may be further calculated as (δ_{b}/Pₜₕ) *R_{c}. Pₜₕ is the pitch of the lead screw, and R_{c} is the encoder resolution of the servo motor 21. For example, for a material driving mechanism using a servo motor with a 22-bit encoder and the lead screw having a pitch of 5mm, the calculated compensation amount C_{b}=[(D-(L0-L))/5]*2^22 count is compensated to the controller.

In some embodiments, the minimum value of the second preset range R2 is 1/3~1/5, for example 1/4. The maximum value of the second preset range R2 is smaller than the minimum value of the first preset range R1. For example, after this withdrawal (for example, the second withdrawal), if 7/8>L/L0 ≥1/4, the back clearance is ignored. In step 424, the position error δₚ is calculated, and the withdrawal length D of the next withdrawal is compensated by the position error δₚ.The position error δₚ may be calculated by the formula δ_{b}=D- (Lₙ₋₁-Lₙ) , where Lₙ₋₁ and Lₙ are the values of the current length L in the previous cycle and this cycle respectively, and n is a positive integer greater than 1.

In some embodiments, the material driving mechanism includes the servo motor 21 and the syringe 10. The piston 13 of the syringe 10 is driven by the servo motor 21 through the lead screw. Correspondingly, according to the position error δ_{ρ}, the compensation amount Cₚ of the servo motor corresponding to the position error δₚ may be further calculated as (δₚ/Pₜₕ) *R_{c}. Pₜₕ is the pitch of the lead screw, and R_{c} is the encoder resolution of the servo motor 21. For example, for a material driving mechanism using a servo motor with a 22-bit encoder and a lead screw having a pitch of 5mm, the calculated compensation amount Cₚ=[(D-(Lₙ₋₁-Lₙ))/5]*2^22 count is compensated to the controller.

Due to factors such as the viscosity of the printing material and the ambient temperature, when the printing material is withdrawn by using the same withdrawal length D for each batch of printing material, the actual withdrawal length of the printing material may be different. By calculating the position error δₚ, this difference can be gradually eliminated.

When the ratio L/L0 is gradually reduced to within the third preset range R3 after multiple withdrawal cycles, the printing material attached to the exterior of the spray head 12 may be reduced as much as possible by adjusting the next withdrawal length D. Referring to Fig. 7, in each cycle of step 420, if the ratio L/L0 is in the third preset range R3, and the maximum value of the third preset range R3 is smaller than the minimum value of the second preset range R2, step 425 may be performed. In step 425, the withdrawal length D is set as the current length L, that is, the current length L serves as the withdrawal length D to perform the next withdrawal.

Taking a value of 1/4 for the minimum value of the second preset range R2 as an example, after this withdrawal (for example, the first withdrawal), if L/L0<1/4, the withdrawal length D is set to be the current length L. For the initial value of the withdrawal length D which is 1/4 times of L0, the withdrawal length D is set to be the current length L, so that it is possible to perform more accurate withdrawal of the printing material attached to the exterior of the spray head in the next cycle, thereby avoiding a phenomenon of an inward recess of the printing material at the spray head resulting from excessive withdrawal of the printing material for the initial value of the withdrawal length D.

In some embodiments, after the current length L serves as the withdrawal length D to perform withdrawal, it is determined whether the length of the printing material attached to the exterior of the spray head 12 is not higher than an allowable value La, and whether the number N of cycle times of withdrawals has exceeded the preset number N0 of times. If the length L of the printing material attached to the exterior of the spray head 12 is no longer higher than the allowable value La, the material driving mechanism will end the withdrawal operation of the piston 13.

If the length of the printing material attached to the exterior of the spray head 12 is still higher than the allowable value La, and the number N of cycle times of withdrawal has exceeded the preset number N0 of times, an alarm signal to prompt abnormal emptying of the spray head 12 is issued. If the length of the printing material attached to the exterior of the spray head 12 is still higher than the allowable value La, and the number N of cycle times of withdrawal does not reach the preset number N0 of times, the position error δₚ when the spray head 12 is driven to move is calculated, and the withdrawal length D of the next withdrawal is compensated by the position error δₚ.

Referring to Fig. 7, step 420 may further include step 426 and step 427. After step 425, the controller determines whether the length of the printing material attached to the exterior of the spray head 12 is no longer higher than an allowable value La in step 426. The allowable value La may vary according to the material of the printing material, and La may be set to be 0.01-0.5mm, for example, 0.05mm. If the current length L is no longer higher than the allowable value La, the material driving mechanism may end the withdrawal operation, for example, a control instruction is sent to the servo motor to shut it down, thereby ending the withdrawal operation.

If the current length L is still higher than the allowable value La, step 427 is performed to determine whether the number N of cycle times of withdrawal has exceeded the preset number N0 of times. The preset number N0 of times may be determined according to the usual value of the number of cycle times for completing the withdrawal in multiple experiments, for example, N0 is set to be 3, that is, 3 cycles. If the number N of cycle times of withdrawal exceeds the preset number N0 of times, it is indicated that there may be fault conditions such as abnormal light source and mechanical malfunction, thereby sending an alarm signal to an operator to prompt abnormal emptying of the spray head 12 by means of sound, light or electricity. At this time, a control instruction may be sent to the material driving mechanism to shut the servo motor down so that the operator performs inspection and troubleshooting.

If the number N of cycle times of withdrawals does not exceed the preset number N0 of times, it is possible to return to step 424 to calculate the position error δₚ when the material driving mechanism withdraws the printing material, and compensate the withdrawal length D of the next withdrawal by the position error δₚ.

In some embodiments, each step of the above-described residual material withdrawal control method is included in a pre-filling process before printing, for example a pre-filling process of a blood vessel printer. In other embodiments, each step of the above-described residual material withdrawal control method is included in the printing process after at least one layer is printed, for example, the printing process of a bone printer.

Hereto, various embodiments of the present disclosure have been described in detail. Some details well known in the art are not described in order to avoid obscuring the concept of the present disclosure. According to the above description, those skilled in the art would fully understand how to implement the technical solutions disclosed here.

Although some specific embodiments of the present disclosure have been described in detail by way of examples, those skilled in the art should understand that the above examples are only for the purpose of illustration but not for limiting the scope of the present disclosure. It should be understood by those skilled in the art that modifications to the above embodiments and equivalently substitution of part of the technical features may be made without departing from the scope and spirit of the present disclosure. The scope of the present disclosure is defined by the appended claims.

## Claims

1. A residual material withdrawal control method, comprising:
obtaining a length of a printing material attached to an exterior of a spray head of a printer; and
performing multiple withdrawals on the printing material attached to the exterior of the spray head by a material driving mechanism until the length of the printing material attached to the exterior of the spray head is not higher than an allowable value, according to the length of the printing material.

2. The residual material withdrawal control method according to claim 1, wherein a step of obtaining a length of a printing material comprises:
calculating the length of the printing material according to a pixel value corresponding to the printing material within an image obtained by photographing the spray head and the printing material attached to the exterior of the spray head.

3. The residual material withdrawal control method according to any of the preceding claims, further comprising:
causing the spray head to eject the printing material outwards by the material driving mechanism before the material driving mechanism withdraws the printing material; and
causing the material driving mechanism to stop driving the printing material and hold on for a preset period of time when the length of the printing material ejected by the spray head reaches a first preset value, so as to stabilize the printing material attached to the exterior of the spray head.

4. The residual material withdrawal control method according to any of the preceding claims, wherein a step of performing multiple withdrawals on the printing material attached to the exterior of the spray head by the material driving mechanism according to the length of the printing material comprises:
setting the length of the printing material after holding on for the preset period of time to be an initial length value L0, and setting a withdrawal length D of the printing material according to the initial length value L0;
withdrawing the printing material attached to the exterior of the spray head by the material driving mechanism in multiple cycles according to the withdrawal length D;
in each cycle, after the printing material attached to the exterior of the spray head is withdrawn according to the withdrawal length D, obtaining a current length L of the printing material attached to the exterior of the spray head after this withdrawal, and calculating a ratio of the current length L to the initial length value L0;
if the ratio is in a first preset range R1, calculating a reverse position error δ_{b} generated when a driving direction of the printing material by the material driving mechanism changes, and compensating a withdrawal length D of next withdrawal by the reverse position error δ_{b}; and
if the ratio is in a second preset range R2, wherein a maximum value of the second preset range R2 is smaller than a minimum value of the first preset range R1, calculating a position error δₚ when the material driving mechanism withdraws the printing material, and compensating a withdrawal length D of the next withdrawal by the position error δₚ.

5. The residual material withdrawal control method according to any of the preceding claims, wherein in each cycle, if the ratio is in a third preset range R3, wherein a maximum value of the third preset range R3 is smaller than a minimum value of the second preset range R2, the withdrawal length D is set to a current length L after this withdrawal.

6. The residual material withdrawal control method according to any of the preceding claims, wherein a step of setting the withdrawal length D of the printing material according to the initial length value L0 comprises:
causing the withdrawal length D to be equal to 1/3~1/5 times of the initial length value L0.

7. The residual material withdrawal control method according to any of the preceding claims, wherein a maximum value of the first preset range R1 is 1, a minimum value of the first preset range R1 is 7/8~9/10; and a minimum value of the second preset range R2 is 1/3~1/5.

8. The residual material withdrawal control method according to any of the preceding claims, wherein the reverse position error δ_{b} is calculated by a formula δ_{b}=D-(L0-L), and the position error δₚ is calculated by a formula δ_{b}=D- (Lₙ₋₁-Lₙ), where Lₙ₋₁ and Lₙ are values of the current length L in a previous cycle and this cycle, respectively, and n is a positive integer greater than 1.

9. The residual material withdrawal control method according to any of the preceding claims, wherein the material driving mechanism comprises a servo motor and a syringe, a piston of the syringe is driven by the servo motor through a lead screw, a compensation amount C_{b} corresponding to the reverse position error δ_{b} is (δ_{b}/Pₜₕ) *R_{c}, and a compensation amount Cₚ corresponding to the position error δₚ is (δₚ/Pₜₕ) *R_{c}, where Pₜₕ is a pitch of the lead screw, and R_{c} is an encoder resolution of the servo motor.

10. The residual material withdrawal control method according to any of the preceding claims, wherein:
after the withdrawal length D is set to be the current length L after this withdrawal, it is determined whether a length of the printing material attached to the exterior of the spray head is no longer higher than an allowable value La, and whether the number N of cycle times of withdrawals has exceeded a preset number N0 of times,
if the length of the printing material attached to the exterior of the spray head is no longer higher than the allowable value La, the material driving mechanism ends a withdrawal operation;
if the length of the printing material attached to the exterior of the spray head is still higher than the allowable value La, and the number N of cycle times of withdrawals has exceeded the preset number N0 of times, an alarm signal to prompt abnormal emptying of the spray head is issued; and
if the length of the printing material attached to the exterior of the spray head is still higher than the allowable value La, and the number N of cycle times of withdrawals does not reach the preset number N0 of times, a position error δₚ when the material driving mechanism withdraws the printing material is calculated, and a withdrawal length D of next withdrawal is compensated by the position error δₚ.

11. The residual material withdrawal control method according to any of the preceding claims, wherein the printer is a bio-printer, and the printing material is bio-ink.

12. A bio-printer comprising:
a material driving mechanism having a spray head and configured to drive a printing material to be ejected or withdrawn through the spray head, wherein the printing material is bio-ink;
a detecting mechanism configured to obtain a signal representative of a length of the printing material attached to an exterior of the spray head; and
a controller signally connected with the detecting mechanism and the material driving mechanism, and configured to perform the residual material withdrawal control method according to any of the preceding claims.

13. The bio-printer according to any of the preceding claims, wherein the material driving mechanism comprises: a power unit and a syringe, the syringe has a syringe barrel, the spray head and a piston, and the power unit is drivingly connected with the piston.

14. The bio-printer according to any of the preceding claims, wherein the power unit comprises:
a servo motor having a power output end that is drivingly connected with the piston.

15. The bio-printer according to any of the preceding claims, wherein the detecting mechanism comprises:
a camera; and
a camera adjusting mechanism connected with the camera and configured to adjust a capturing position and a capturing angle of the camera.

16. The bio-printer according to any of the preceding claims, wherein the camera adjusting mechanism comprises:
a support base;
a sliding base connected with the support base through a guide structure, and slidable relative to the support base; and
a turntable slidably disposed on the sliding base and rotatably connected with the camera.
